# EUROPEAN PATENT APPLICATION

(11) **EP 2 565 796 A1**
(43) Date of publication of application: **06.03.2013**
(21) Application number: 12162072.8
(22) Date of filing: 29.03.2012
(51) Int. Cl.: G06F 13/38

(54) **Wireless data transfer card**

(30) Priority: 02.09.2011 TW 100216511
(71) Applicant: Spectec Computer Co., Ltd., Taipei City (TW)
(72) Inventor: Joung, S.T., Taipei City (TW)
(74) Representative: Viering, Jentschura & Partner

(57) **Abstract**

The instant disclosure relates to a wireless data transfer card (1) capable of adapting to a memory card (12). The wireless data transfer card (1) includes a main body (10) and a circuit module (14) disposed therein. The main body (10) has a data transfer interface (11), and a slot (13) configured for receiving a micro SD memory card is formed on the main body (10). The circuit module (14) is electrically connected to the data transfer interface (11) and the slot (13). Based on the generation of a trigger signal, the circuit module (14) enables the wireless communication operation. Thus, data from the memory card (12) can be transferred wirelessly to a remote location through WiFi. The wireless data transfer card (1) of the instant disclosure is usable with a digital camera, a digital camcorder, or a mobile communication device with picture-taking capability to share the stored files instantly through the wireless network.

## Description

### BACKGROUND OF THE INVENTION

### Field of the Invention

The instant disclosure relates to a wireless data transfer card; more particularly, to a wireless data transfer card capable of adapting to a memory card.

### Description of Related Art

With the advancement in electronic technology, electronic devices such as digital cameras, digital video cameras, or mobile phones with built-in cameras continue to become more multi-functional. For example, existing digital cameras can be cabled to a host computer to display digital photos for the users. The traditional photographic processing to develop the film is becoming less common nowadays.

Although the digital cameras have become more improved in many aspects, a cable is still required to download the photos from the digital cameras to the computer. The cable may have a USB, RS-232, or a PS/2 interface. Such limitation poses great inconvenience in situations such as sharing photos/videos instantly while traveling abroad.

### SUMMARY OF THE INVENTION

The instant disclosure provides a wireless data transfer card capable of adapting to a memory card. This wireless data transfer card is able to address the abovementioned limitation.

The wireless data transfer card provided by the instant disclosure comprises a main body and a circuit module. The main body has a data transfer interface and is defined by a slot for receiving the memory card. The circuit module, being disposed inside the main body, is connected electrically to the data transfer interface and the slot. The circuit module includes a wireless communication unit and a control unit. The control unit is connected electrically to the wireless communication unit and enables the wireless communication unit by a trigger signal. The wireless communication unit allows the wireless data transfer card to communicate wirelessly to a host device. Thus, the host device is able to store/extract information to/from the memory card plugged to the wireless data transfer card.

Based on the above, the wireless data transfer card of the instant disclosure is applicable to devices such as digital cameras, digital video cameras, or camera phones to transfer the stored information in the memory card wirelessly and instantly to a host device.

In order to further appreciate the characteristics and technical contents of the instant disclosure, references are hereunder made to the detailed descriptions and appended drawings in connection with the instant disclosure. However, the appended drawings are merely shown for exemplary purposes, rather than being used to restrict the scope of the instant disclosure.

### BRIEF DESCRIPTIONS OF THE DRAWINGS

Fig. 1 is a schematic view of a wireless data transfer card capable of adapting to a memory card of the instant disclosure.

Fig. 2 shows a functional block diagram of the wireless data transfer card of the instant disclosure.

Fig. 3 shows the programs that internally control the memory cell of the wireless data transfer card of the instant disclosure.

Fig. 4 shows an index image pre-stored in the memory cell of the wireless data transfer card of the instant disclosure.

Fig. 5 shows another index image pre-stored in the memory cell of the wireless data transfer card of the instant disclosure.

Fig. 6A shows yet another index image pre-stored in the memory cell of the wireless data transfer card of the instant disclosure.

Fig. 6B shows further still another index image pre-stored in the memory cell of the wireless data transfer card of the instant disclosure.

Fig. 7 is a schematic diagram showing the wireless communication between the wireless data transfer card of the instant disclosure and a digital device.

Fig. 8 shows a functional block diagram of a wireless data transfer card for a second embodiment of the instant disclosure.

Fig. 9 shows a flow chart illustrating the control process of the wireless data transfer card of the instant disclosure.

### DETAILED DESCRIPTIONS OF PREFERRED EMBODIMENTS

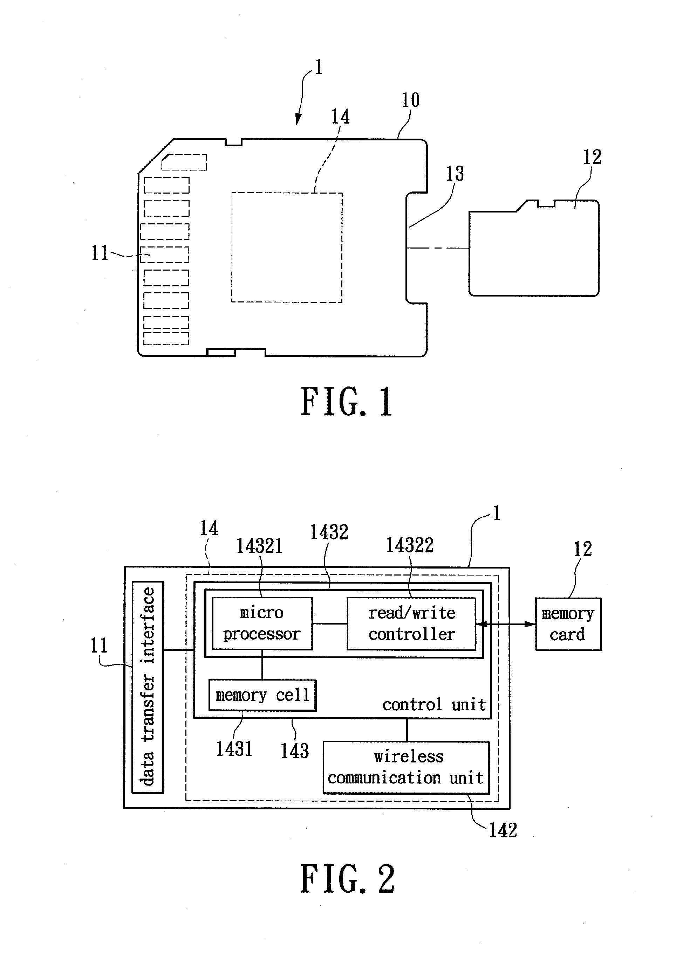

Please refer to Fig. 1, which shows a schematic view of a wireless data transfer card (1) adaptable to a memory card. The wireless data transfer card (1) has a main body (10). The main body (10) includes an internal data transfer interface (11) and a circuit module (14). A slot (13) is formed on the main body (10) for receiving a memory card (12). The circuit module (14) is electrically connected to the data transfer interface (11) and the slot (13). The data transfer interface (14) enables external electronic device (not shown) to store or extract information to/from the inserted memory card (12) inside the slot (13). For the instant embodiment, the data transfer interface (11) is defined by a plurality of terminals. For example, when the main body (10) is plugged inside a memory card slot of a digital electronic device, the digital electronic device can store/extract information to/from the memory card (12) of the wireless data transfer card 1 through the data transfer interface (11). The memory card (12) can be used to store data in different formats such as still pictures, audio, video, and documents. The aforementioned slot (13) may be configured to receive a Micro Secure Digital (SD) memory card. Correspondingly, the memory card (12) may be a Micro SD type memory card. The above specification of the slot (13) is for explaining purpose only and is not restricted thereto.

Besides controlling the operation of data transfer between the data transfer interface (11) and the memory card (12) inserted inside the slot (13), the circuit module (14) also has wireless data transfer capability. The wireless communication can be enabled by a predetermined procedure. Based on the needs of the user, data can be uploaded/downloaded wirelessly from/to the memory card (12). For the instant embodiment, the term "upload" refers to transfer data wirelessly from the memory card (12) inserted inside the slot (13) of the wireless data transfer card (1) to a remote host device. Whereas the term "download" refers to receive data wirelessly from a remote destination by the wireless data transfer card (1) and save the received files in the memory card (12) accommodated by the slot (13). Since the slot (13) of the main body (10) is compatible to different sizes of the memory card (12), the user can select the appropriate size of the memory card (12) to implement the wireless communication.

Fig. 2 shows a functional block diagram of the wireless data transfer card (1) of the instant disclosure. The circuit module (14) includes a wireless communication unit (142) and a control unit (143). Based on the control unit (143), the wireless communication unit (142) supports two-way data transfer for the inserted memory card (12). The wireless communication unit (142) may be an infrared communication unit, a Bluetooth communication unit, a radio frequency (RF) communication unit, or a wireless (Wi-Fi) communication unit.

The control unit (143) is electrically connected to the data transfer interface (11), the wireless communication unit (142), and the slot (13). The data transfer between the data transfer interface (11) and the inserted memory card (12) is controlled by the control unit (143). The control unit (143) can enable the wireless communication unit (142) based on a trigger signal. Thus, the wireless data transfer card (1) is enabled to communicate wirelessly with a wireless device (not shown) for uploading/downloading data to/from the wireless device.

More specifically, the control unit (143) includes a processing module (1432) and a memory cell (1431). The processing module (1432) and the memory cell (1431) are electrically connected to each other. For the instant disclosure, the memory cell (1431) is a non-volatile type memory cell. The processing module (1432) further includes a micro processor (14321) and a read/write controller (14322). The micro processor (14321) and the read/write controller (14322) are electrically connected to each other. The memory card (12) is accessible for the read/write controller (14322) through the slot (13). The processing module (1432) serves as the processing center of the wireless data transfer card (1) and controls the operation of the wireless data transfer card (1) based on the firmware of the memory cell (1431).

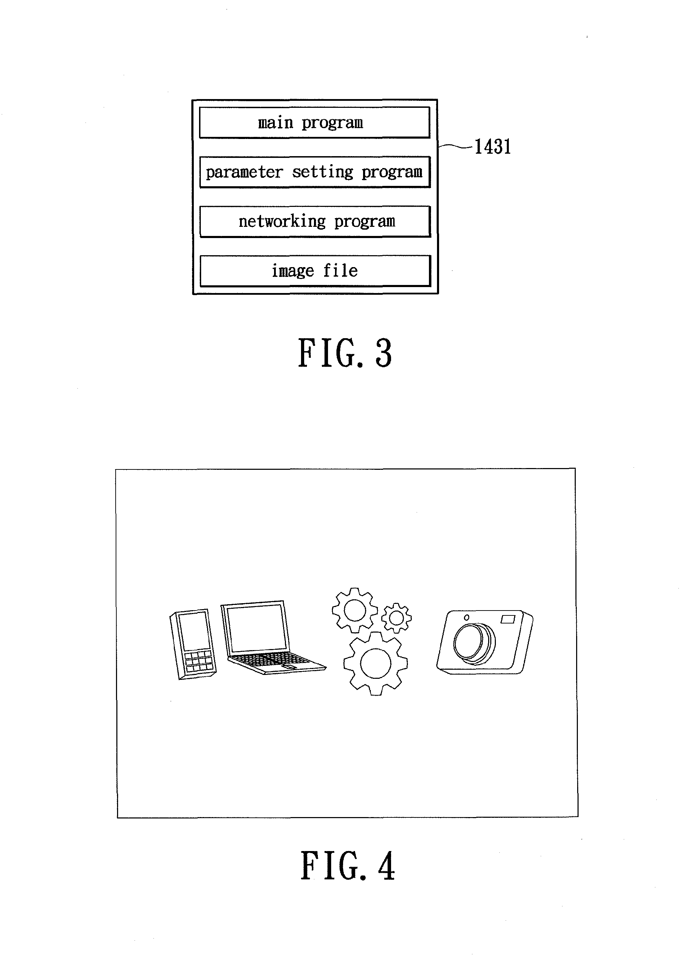

As shown in Fig. 3, the firmware of the memory cell (1431) includes a main program, a parameter setting program, a networking program, and an image file. The main program enables the processing module (1432) to implement control over operation of the wireless data transfer card (1). The parameter setting program is used to set various parameters of the memory card (12). The networking program allows the wireless communication program (142) to communicate wirelessly with a wireless device. The image file provides multiple pre-stored index images to guide the user for operating the wireless data transfer card (1). Each index image corresponds to a specific wireless communication mode. The parameter setting and networking programs enable the user to adjust the settings of the wireless data transfer card (1) through the computer.

Regarding the control of wired data transfer of the memory card (12) by the control unit (143), detailed descriptions are discussed hereinbelow. When the memory card (12) is plugged in the slot (13) of the wireless data transfer card (1), while the wireless data transfer card (1) is plugged in the memory card slot of the digital electronic device, the digital electronic device can store/extract data to/from the memory card (12) through the data transfer interface (11). The processing module (1432) is informed with the read/write signal from the digital electronic device through the data transfer interface (11). The read/write controller (14322) is controlled by the micro processor (14321) to read/write data from/to the memory card (12).

Regarding the control of wireless data transfer of the memory card (12) by the control unit (143), detailed descriptions are provided hereinbelow. When the memory card (12) is plugged in the slot (13) of the wireless data transfer card (1), while the wireless data transfer card (1) is plugged in the memory card slot of the digital electronic device, the control unit (143) first determines whether the trigger signal is generated. The trigger signal is used for determining whether to enable the wireless communication unit (142). To search for the trigger signal, with regard to a digital electronic device such as a digital camera, the control unit (143) determines whether any of the index images pre-stored in the memory cell (1431) has been manipulated by the user through the digital electronic device. The manipulation referred to herein includes deleting, enlarging, shrinking, or rotating the index image. When any of the preceding operation is conducted, the processing module (1432) of the control unit (143) deems the trigger signal has been created. At this state, the control unit (143) would enable the wireless network between the wireless communication unit (142) and the wireless device (not shown). Then, based on the corresponding wireless communication mode of the manipulated index image, the control unit (143) implements the data transfer between the wireless data transfer card (1) and the wireless device wirelessly.

It is worth noting the pre-stored index images of the picture file stored in the memory cell (1431) may be used repeatedly by the wireless data transfer card (1) and exist permanently. For example, if the digital electronic device is operated to delete any of the index images, the control unit (143) will not actually delete the selected index image. Instead, the deleting operation is deemed by the control unit (143) to enable the wireless communication unit (142) only.

Please refer to Fig. 4, which shows one of the index images pre-stored in the memory cell (1431). The corresponding wireless communication mode allows a wireless device, such as a tablet computer, a desktop computer, or a laptop computer, to store/extract data to/from the wireless data transfer card (1) plugged to the digital electronic device (e.g., digital camera) wirelessly or to change the settings of the wireless data transfer card (1) wirelessly. For example, when the user uses the digital electronic device to delete the index image shown in Fig. 4, the wireless data transfer card (1) will enable the wireless communication unit (142). Then, the user can input a predetermined internet address through the wireless device to establish a wireless network with the networking program of the wireless data transfer card (1). Thus, a wireless network is established between the wireless data transfer card (1) and the wireless device. The networking program in particular displays a webpage through the wireless device to allow the user to complete the data transfer operation. For example, the user can navigate the webpage to enable the wireless device to store/extract data to/from the memory card (12) of the wireless data transfer card (1) wirelessly. The user can also use this webpage to input or adjust the parameters of the parameter setting program for the memory cell (1431) of the wireless data transfer card (1). The parameters may be the internet server networking parameter, data uploading parameter, data downloading parameter, etc.

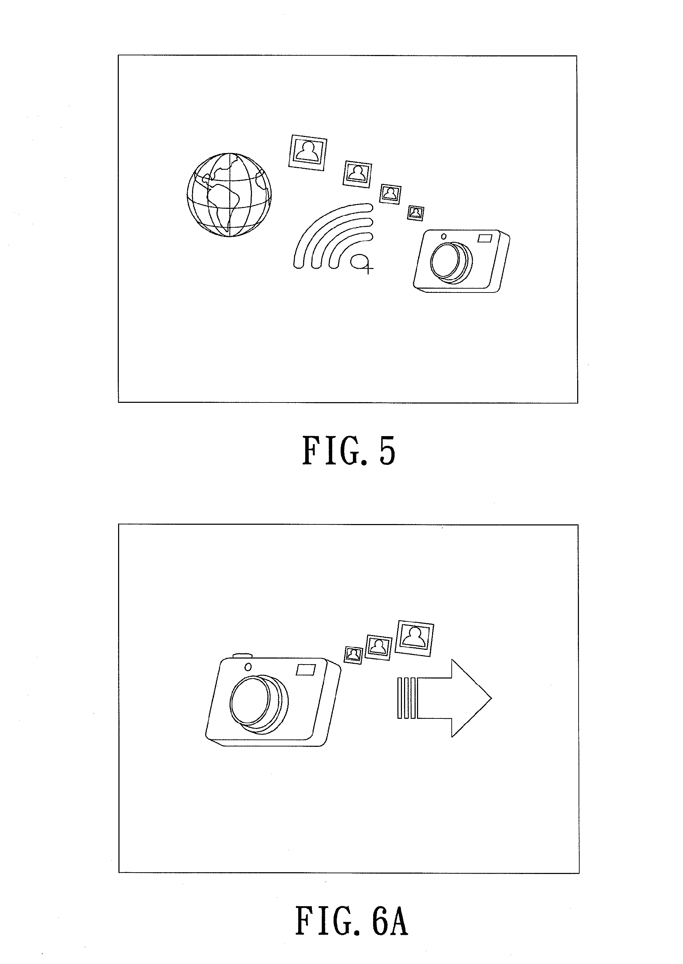

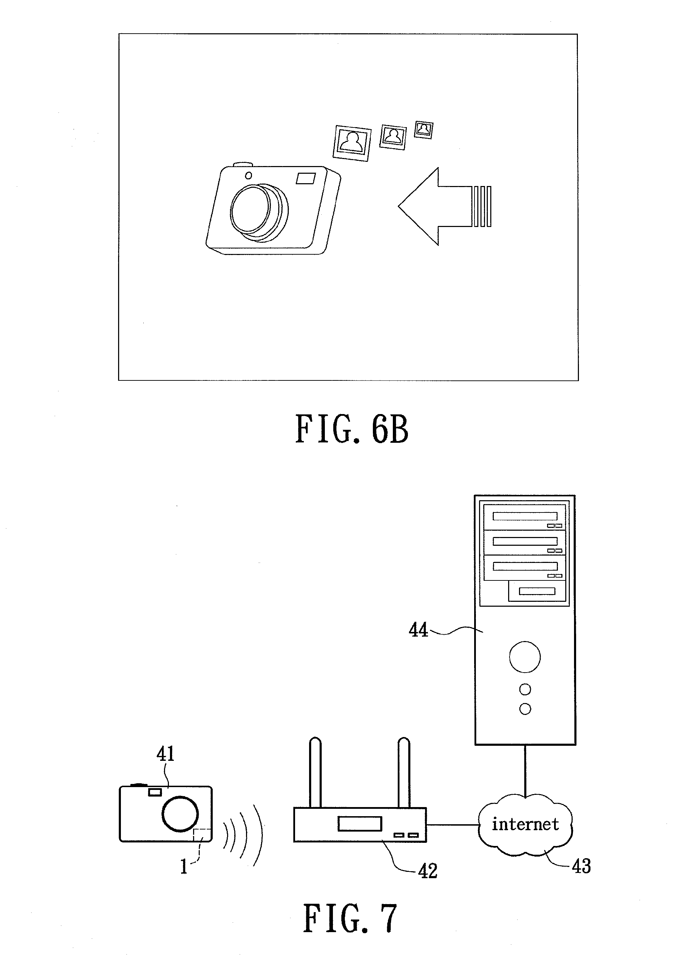

Please refer to Fig. 5, which shows a different index image pre-stored in the memory cell (1431) of the wireless data transfer card (1). For this index image, the corresponding wireless communication mode enables the wireless data transfer card (1) plugged to the digital electronic device (e.g., digital camera) to upload stored data to an internet server. As illustrated in Fig. 7, when the user uses a digital electronic device (41) to delete the index image shown in Fig. 5, the wireless data transfer card (1) enables the wireless communication unit (142), such that the wireless data transfer card (1) is connected wirelessly to a wireless access point (42). The wireless access point (42) is connected to an internet server (44) by an internet (43). Thus, data can be uploaded from the memory card (12) of the wireless data transfer card (1) to the internet server (44). If the data already stored in the internet server (44) is the same as the data stored in the memory card (12), the wireless data transfer card (1) does not have to upload the same data. The internet server (44) may be an e-mail server, an internet exchange server, a live communications server, or a file transfer server.

Please refer to Figs. 6A and 6B, which show two other types of index image pre-stored in the memory cell (1431). Fig. 6A corresponds to a wireless communication mode which enables the wireless data transfer card (1) plugged to a first digital electronic device to transfer data wirelessly to another wireless data transfer card (1) plugged to a second digital device. Whereas Fig. 6B corresponds to a wireless communication mode which enables the wireless data transfer card (1) plugged to the second digital device to receive data wirelessly from another wireless data transfer card (1) plugged to the first digital device. When an user uses the first digital device and navigates to the index image shown in Fig. 6A and deletes this image, while another user uses the second digital device and navigates to the index image shown in Fig. 6B and deletes this image, the wireless data transfer card (1) plugged to the first digital device is connected wirelessly to the wireless data transfer card (1) plugged to the second digital device. At this state, data can be transferred wirelessly from the wireless data transfer card (1) plugged to the first digital device and be received by the wireless data transfer card (1) plugged to the second digital device.

It is worth noting the index images shown in Figs. 4 ∼ 6B are for explaining purpose only and are not restricted thereto.

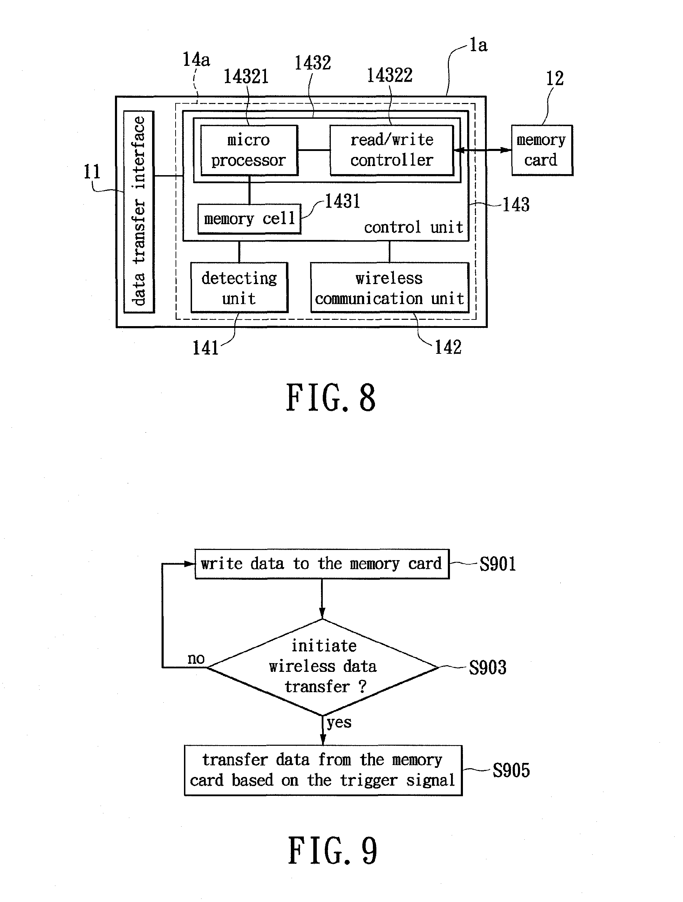

Fig. 8 shows a functional block diagram for a wireless data transfer card (1a) for a second embodiment of the instant disclosure. In comparing to Fig. 2 of the first embodiment, the wireless data transfer card (1a) has a circuit module (14a), where the circuit module (14a) includes a detecting unit (141) connected electrically to the control unit (143). The detecting unit (141) may be a g-sensor, a gyroscope, a tilt sensor, or a vibration sensor.

The wireless data transfer card (1a) of Fig. 8 not only can determine whether the trigger signal is generated according to the previous embodiment, but can also use the detecting unit (141) to detect the applied force to the wireless data transfer card la in determining whether to generate the trigger signal. For example, when the user shakes the digital electronic device plugged with the wireless data transfer card 1a, the detecting unit (141) of the wireless data transfer card (1a) can detect the exerted force from the user. Then, the detecting unit (141) can convert this vibration force (or an acceleration value) to a corresponding index value. The detecting unit (141) then determines whether this index value is greater than a predetermined threshold value before deciding to generate a trigger signal. In other words, when the index value is greater than the threshold value, the detecting unit (141) confirms the vibration to be valid and proceeds in creating and transferring the trigger signal to the control unit (143). Upon receiving the trigger signal, the control unit (143) enables the wireless communication unit (142) to execute the corresponding mode of wireless communication.

Different types of wireless communication mode for the trigger signal generated by the detecting unit (141) are described hereinbelow. Namely, the detecting result of the detecting unit (141) is compared to multiple predetermined threshold values, where each predetermined threshold value corresponds to a specific wireless communication mode. For example, the predetermined threshold values may include a first predetermined threshold value (corresponds to the wireless operation mode illustrated by Fig. 4), a second predetermined threshold value (corresponds to the wireless operation mode illustrated by Fig. 5), a third predetermined threshold value (corresponds to the wireless operation mode illustrated by Fig. 6A), and a fourth predetermined threshold value (corresponds to the wireless operation mode illustrated by Fig. 6B). In particular, the first threshold value < the second threshold value < the third threshold value < the fourth threshold value. Thus, when the index value obtained from the detecting unit (141) is greater than the first threshold value and less than the second threshold value, the wireless data transfer card (1a) operates in the wireless communication state as shown in Fig. 4. Whereas if the index value is greater than the second threshold value and less than the third threshold value, the wireless data transfer card (1a) operates in the wireless communication state as shown in Fig. 5, and so forth.

Alternatively, the control unit (143) shown in Fig. 8 can be used to monitor how many times have the index value obtained from the detecting unit (141) surpasses a particular threshold value within a specified time period, to determine the corresponding wireless communication mode. For example, if the index value overshoots one time, the wireless data transfer card 1a would operate in the wireless communication state shown in Fig. 4. If the index value overshoots two times, the wireless data transfer card (1a) would operate in the wireless communication state shown in Fig. 5. If the index value overshoots three times, the wireless data transfer card (1a) would operate in the wireless communication state shown in Fig. 6A. If the index value overshoots four times, the wireless data transfer card (1a) would operate in the wireless communication state shown in Fig. 6B.

Please refer to Fig. 9, which shows a flow chart illustrating the control process of the wireless data transfer card (1,1a) of the instant disclosure. Please also refer to Figs. 1, 2, and 8 in conjunction with Fig. 9. When the memory card-plugged wireless data transfer card (1,1a) is plugged to the digital electronic device (e.g., digital camera), the still images and/or videos taken by the digital camera is written to the memory card (12) by the control unit (143) (step S901). Next, the control unit (143) determines whether to enable the wireless data transfer (step S903) by detecting the trigger signal. The trigger signal may be generated by any of the abovementioned means, therefore no further description is given herein. If the decision in step S903 is "YES", the data stored in the memory card (12) is transferred wirelessly according to the corresponding wireless communication mode of the particular trigger signal (step S905). If the decision in step S903 is "NO", the control process returns to step S901.

Based on the above, the memory card-adaptable wireless data transfer card (1,1a) of the instant disclosure can be used with digital electronic devices such as digital cameras, digital camcorders, or mobile communication devices with picture-taking capabilities. By determining whether the trigger signal is generated, the control unit (143) of the wireless data transfer card (1,1a) is able to implement corresponding wireless communication according to the trigger signal. Thus, data can be uploaded wirelessly from the wireless data transfer card (1,1a) to the remote wireless device or downloaded wirelessly from the remote wireless device to the wireless data transfer card (1,1a). Through the use of wireless data transfer card (1,1a) of the instant disclosure, the issue of sharing photos/video clips instantly is addressed.

The descriptions illustrated *supra* set forth simply the preferred embodiments of the instant disclosure; however, the characteristics of the instant disclosure are by no means restricted thereto. All changes, alternations, or modifications conveniently considered by those skilled in the art are deemed to be encompassed within the scope of the instant disclosure delineated by the following claims.

## Claims

1. A wireless data transfer card (1), adaptable to a memory card (12), comprising:
a main body (10) having a data transfer interface (11), wherein a slot (13) is formed on the main body (10) for receiving the memory card (12); and
a circuit module (14), disposed in the main body (10) while connected electrically to the data transfer interface (11) and the slot (13), comprising:
a wireless communication unit (142); and
a control unit (143) connected electrically to the wireless communication unit (142), wherein the control unit (143) enables the wireless communication unit (142) based on the generation of a trigger signal, for enabling the wireless data transfer card (1) to establish a wireless network with a wireless device and implement data transfer.

2. The wireless data transfer card (1) of claim 1, wherein the wireless data transfer card (1) is pluggable to a digital electronic device (41) and transfer data therewith through the data transfer interface (11), and wherein the control unit (143) receives the read/write signal from the digital electronic device (41) through the data transfer interface (11) and read/write data from/to the memory card (12).

3. The wireless data transfer card (1) of claim 2, wherein when one of the index images pre-stored in the control unit (143) is manipulated by the user through the digital electronic device (41), the trigger signal is generated and detected by the control unit (143), and wherein each index image corresponds to a particular wireless data transfer mode between the wireless data transfer card (1) and the wireless device.

4. The wireless data transfer card (1) of claim 3, wherein the index image may be manipulated by deleting, enlarging, shrinking, or rotating the index image.

5. The wireless data transfer card (1) of claim 2, wherein the wireless communication unit (142) is an infrared communication unit, a Bluetooth communication unit, a radio frequency (RF) communication unit, or a wireless (WiFi) communication unit.

6. The wireless data transfer card (1) of claim 2, wherein the digital electronic device (41) is a digital camera, a digital camcorder, or a mobile communication device having picture-taking capability, and wherein the wireless device is a tablet computer, a desktop computer, a laptop computer, a digital camera, a digital camcorder, a mobile communication device with picture-taking capability, a wireless access point (42), or a smart phone.

7. The wireless data transfer card (1a) of claim 2, further comprising a detecting unit (141) for detecting any external force applied to the wireless data transfer card (1a), wherein the trigger signal is generated based on the detection result of the detecting unit (141), and wherein the detecting unit (141) is a g-sensor, a gyroscope, a tilt sensor, or a vibration sensor.

8. The wireless data transfer card (1) of claim 2, wherein the slot (13) is configured for receiving a Micro Secure Digital (SD) type memory card (12).

9. The wireless data transfer card (1) of claim 2, wherein the control unit (143) includes a processing module (1432) and a memory cell (1431), wherein the processing module (1432) is electrically connected to the memory cell (1431), and wherein the processing module (1432) controls the operation of the wireless data transfer card (1) according to information embedded in the memory cell (1431).

10. The wireless data transfer card (1) of claim 9, wherein the processing module (1432) includes a micro processor (14321) and a read/write controller (14322), and wherein the micro processor (14321) read/write data from/to the memory card (12) through the read/write controller (14322) for controlling the operation of the wireless communication unit (142).
